# EUROPEAN PATENT SPECIFICATION

(11) **EP 3 494 552 B1**
(45) Date of publication and mention of the grant of the patent: **14.08.2024**
(21) Application number: 17761126.6
(22) Date of filing: 02.08.2017
(51) Int. Cl.: G07C 5/08, G07C 5/00

(54) **METHOD FOR DETECTING AND VALIDATING ANOMALOUS STRESSES OF A TRANSPORTATION VEHICLE RECORDED BY AN ON-BOARD DEVICE ADAPTED TO ACQUIRE DATA RELATIVE TO MOTION AND/OR DRIVING PARAMETERS OF A TRANSPORTATION VEHICLE**
VERFAHREN ZUM ERFASSEN UND VALIDIEREN VON ANORMALEN BELASTUNGEN EINES TRANSPORTFAHRZEUGS, DIE VON EINER FAHRZEUGSEITIGEN VORRICHTUNG AUFGEZEICHNET WURDEN, DIE ZUM ERFASSEN VON DATEN IN BEZUG AUF BEWEGUNGS- UND/ODER FAHRPARAMETER EINES TRANSPORTFAHRZEUGS ANGEPASST IST
PROCÉDÉ DE DÉTECTION ET DE VALIDATION DE CONTRAINTES ANORMALES D'UN VÉHICULE DE TRANSPORT ENREGISTRÉES PAR UN DISPOSITIF EMBARQUÉ ADAPTÉ À L'ACQUISITION DE DONNÉES RELATIVES À DES PARAMÈTRES DE MOUVEMENT ET/OU DE CONDUITE D'UN VÉHICULE DE TRANSPORT

(30) Priority: 02.08.2016 IT 201600081122
(43) Date of publication of application: 12.06.2019
(73) Proprietor: OCTO Telematics S.p.A., 00173 Roma (IT)
(72) Inventor: AMENDOLAGINE, Marco, I-00173 Roma (IT); ZUCO, Giuseppe, I-00173 Roma (IT); FERRO, Maria, I-00173 Roma (IT)
(74) Representative: Petraz, Gilberto Luigi
(86) International application number: PCT/IB2017/054718
(87) International publication number: WO 2018/025194

(56) References cited:
- DE-A1- 10 206 351
- DE-A1- 102013 203 943
- US-A1- 2014 358 840
- US-A1- 2015 019 067
- US-A1- 2016 094 964

## Description

### FIELD OF THE INVENTION

The present invention relates to a method for detecting and validating anomalous stresses of a transportation vehicle recorded by an on-board device adapted to acquire data relative to motion and/or driving parameters of a transportation vehicle.

### PRIOR ART

Methods for detecting and validating anomalous stresses of a transportation vehicle recorded by an on-board device (terminal), installed on a transportation vehicle, adapted to acquire data relative to motion and/or driving parameters of a transportation vehicle in real time by using appropriate sensors are known.

The so called anomalous stresses are the movements of the vehicle or of part thereof which are potentially caused by an accidental crash or rollover of the vehicle itself, in case of accident.

On the basis of the data related to motion and/or driving parameters of the transportation vehicle acquired in real-time, the on-board device can record the anomalous stresses to which the transportation vehicle is subject.

This recording is usually performed by comparing the trend of the signals representative of some of the acquired data, e.g. the acceleration trend to which the transportation vehicle is subjected, with a reference profile representative of the acceleration trend of the transportation vehicle in normal use conditions.

When set thresholds are exceeded, such comparison makes it possible to highlight possible deviations of acceleration, presumably caused by crashes to which the vehicle is subject, which are thus recorded by the on-board device as anomalous stresses.

However, such recording does not aim at definitively validating the anomalous stresses to which a transportation vehicle is subjected.

With this regard, the on-board device is also configured to definitively validate the anomalous stresses, whereby each anomalous stress recorded by the on-board device is processed to establish whether such anomalous stress is "true", i.e. correlated to a crash on the body of the vehicle, or "false".

According to a detecting and validating method of the prior art, the validation is indeed performed inside the on-board device, which is configured to evaluate the distance traveled by the transportation vehicle in an interval of time successive to the recorded anomalous stress and the final speed achieved by the transportation vehicle. Such physical quantities (distance traveled and final speed) are obtained by the on-board device by means of the satellite geo-positioning system operatively connected to and in communication with the on-board device.

Such detecting and validating method is not free from faults.

Firstly, in order to improve the quality of the detection and validation, it is practically impossible to use complex algorithms, unless high power processes are used in the on-board device with the consequent increase of costs and energy consumptions (the latter aspect is relevant for the battery discharge time).

Furthermore, tuning a large fleet of on-board devices is complex and costly, because it requires many adjustments by remotely updating all the on-board devices (terminals) of the fleet.

It is apparent that the algorithms and the service quality guaranteed by an on-board device depends of the type of hardware present in the on-board device installed on a transportation vehicle.

This obviously means that the older on-board devices will have considerably different performance from the more recent ones.

The phenomenon of obsolescence is a very significant and not negligible drawback, also considering that in the specific scope of application, such as insurance telematics, an on-board device may remain fitted on the same transportation vehicle for many years.

For this reason, the need is strongly felt to have methods for detecting and validating anomalous stresses of a transportation vehicle which are the most accurate and reliable as possible from the points of view of quantity reply and which, on the other hand, can contrast and reduce the phenomenon of obsolescence of on-board devices on the field as much as possible.

It is the object of the present invention to make available a method for detecting and validating anomalous stresses of a transportation vehicle which makes it possible to solve or at least in part reduce the drawbacks described above with reference to the prior art described above.

US 2014/358840 A1 describes an apparatus, system and method for risk indicator calculation for driving behaviour and for reconstructing a vehicle trajectory.

Such object is achieved by means of a method for detecting and validating anomalous stresses of a transportation vehicle, as defined in general in claim 1.

Alternative preferred and advantageous embodiments of the aforesaid method are defined in the accompanying dependent claims.

Such object is also achieved by means of a method for detecting and validating anomalous stresses of a transportation vehicle by means of a program product.

The invention will be better understood by the following detailed description of a particular embodiment, made by way of example and consequently not limiting in any manner, with reference to the accompanying drawings which are briefly described in the next paragraph.

### BRIEF DESCRIPTION OF THE DRAWINGS

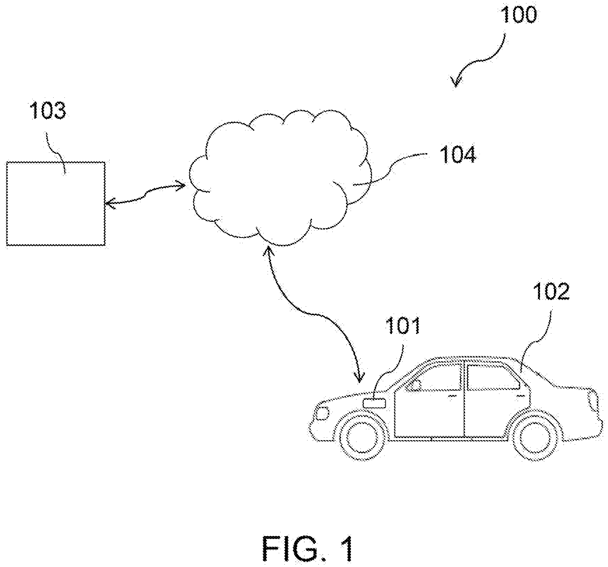

Figure 1 shows a functional block chart exemplifying a system adapted to implement a method for validating anomalous stresses of a transportation vehicle recorded and transmitted to a remote processing station by an on-board device adapted to acquire data relative to motion and/or driving parameters of a transportation vehicle.

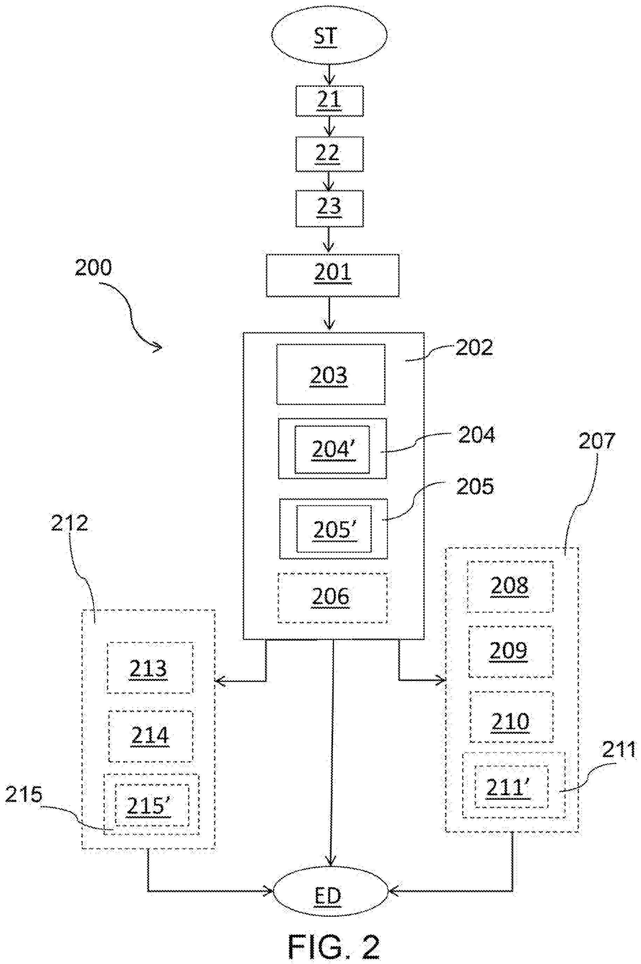

Figure 2 shows a flow chart of a non-limiting example of embodiment of a method for validating anomalous stresses of a transportation vehicle recorded and transmitted to a remote processing station by an on-board device adapted to acquire data relative to motion and/or driving parameters of a transportation vehicle.

### DETAILED DESCRIPTION

Figure 1 shows a non-limiting example of embodiment of a system adapted to implement a method for detecting and validating anomalous stresses of a transportation vehicle recorded and transmitted to a remote processing station by an on-board device adapted to acquire data relative to motion and/or driving parameters of a transportation vehicle.

Such system, indicated by numeric reference numeral 100 as a whole, comprises an on-board device 101 installed on a transportation vehicle 102.

The transportation vehicle 102 is, for example, a car, but it could also be a truck, a motorcycle or a means of public transport, such as, for example, a bus.

It is worth noting that "anomalous stresses" mean the movements of the transportation vehicle 102 or of a part thereof which are potentially caused by an accident crash or even the rollover of the transportation vehicle 102 itself, in case of accident.

Furthermore, it is worth noting that "validating" an anomalous stress of a transportation vehicle means classifying such anomalous stress, previously only recorded and transmitted by the on-board device, as "true" or "false", so as to be able to eliminate false alarms (anomalous stresses not caused by an accidental crash or the rollover of the transportation vehicle itself) and to be able to successively supply only the anomalous stresses actually caused by accidents to which a vehicle may have been subjected ("true" anomalous stresses) to an operator for management from the insurance point of view.

Turning back to the example in figure 1, the system 100 further comprises at least one remote processing station 103, e.g. an electronic computer server, operatively connected to the on-board device 101 by means of a data communication network 104.

The data communication network 104, e.g. a GSM cellular telephony network, allows data transmission between the on-board device 101 and the remote processing station 103. The data transmission between the on-board device 101 and the remote processing station 103 is preferably of the two-way type.

As previously mentioned, the on-board device 101 is a hardware and software system configured to acquire data related to motion and/or driving parameters of a transportation vehicle 102.

Furthermore, the on-board device 101 is configured to record and transmit data representing anomalous stresses (triggers) of the transportation vehicle 102, recorded on the basis of such acquired data, to the remote processing station 103 by means of the data communication network 104.

The remote processing control unit 103 is instead configured to further receive and process data acquired and processed by a plurality of on-board devices 101 installed aboard respective transportation vehicles 102. It is worth noting that a very high number of the transportation vehicles can be managed by the remote processing station 103, e.g. in the order of a few hundreds of thousands or of millions.

The remote processing station 103 is a hardware and software system configured to monitor the transportation vehicles, e.g. in order to evaluate risk factors when driving them and the driving habits of the vehicle drivers, to receive requests for help and/or rescue, to detect accidents, to detect thefts, and so on.

In particular, for the purpose of detecting accidents, the remote processing station 103 is configured to validate the anomalous stresses recorded and transmitted to the remote processing station 103 by the on-board device 101, on the basis of the acquired data related to motion and/or driving parameters of the transportation vehicle 102.

As previously mentioned, the on-board device 101 is instead configured to detect the anomalous stresses.

The method for detecting and validating anomalous stresses of a transportation vehicle will be described below, also with reference to the embodiment shown in figure 2.

Turning back now to the on-board device 101, according to an embodiment, the data it acquires, related to motion and/or driving parameters of a transportation vehicle 102, are preferably of accelerometric type.

With this regard, the on-board device 101 comprises one or more biaxial or triaxial digital inertia type sensors (accelerometer and/or gyroscope), not shown in the figure 1.

The on-board device 101 further comprises a local processing unit, not shown in the figures, configured for managing the on-board device 101 and for processing and transmitting processed data and receiving possible configuration, diagnostic or remote control data. The data is transmitted and received by the on-board device 101 by means of a local data communication unit (not shown in the figures), operatively connected to the local data processing unit, which makes it possible for the on-board device 101 to interface with the data communication network 104.

For the purpose of detecting accidents in which the transportation vehicle 102 may be involved, the local processing unit is configured to record data representative of anomalous stresses (triggers) on the basis of the data acquired by the on-board device 101.

With this regard, the local processing unit of the on-board device 101 is configured to load and run one or more set program codes, previously stored in the local memory unit (not shown in the figures) of the on-board device 101.

In particular, the local processing unit of the on-board device 101 is configured to read in real time the data acquired by the accelerometer type sensor and to detect anything which is not compatible with the behavior of the transportation vehicle during its normal use. For example, the local processing unit of the on-board device 101 is configured to compare the trend of the transportation vehicle detected with a plurality of reference profiles, each representative of the acceleration of the transportation vehicle in case of a set crash. After having identified the reference profile which comes closest to the acceleration trend of the detected transportation vehicle, the local processing unit of the on-board device is configured to establish whether the detected anomalous stress represents a priority event or not on the basis of the energy content of the reference profile.

If the energy intensity of the acceleration trend of the transportation vehicle decreases in the instances after detecting the anomalous stress, then the detected anomalous stress corresponds to a priority event (actual crash).

If the energy intensity of the acceleration trend of the transportation vehicle does not decrease in the instances after detecting the anomalous stress, then the detected anomalous stress corresponds to a secondary event (mini-crash).

In greater detail, the local processing unit of the on-board device 101 is configured to store in the local memory unit the acceleration trend of the transportation vehicle 102, acquired by the accelerometric type sensor, in a set format, having a sampling frequency preferably of 200 Hz, and total time duration preferably equal to 6 seconds (4 seconds before the anomalous stress, 1 second related to the anomalous stress, 1 second after the anomalous stress) for anomalous stresses representative of a priority event (crash) and preferably equal to 3 seconds (1 second before the anomalous stress, 1 second related to the anomalous stress, 1 second after the anomalous stress) for anomalous stresses representative of a secondary event (mini-crash).

From the point of view of data processing before storage (recording) in the local memory unit of the on-board device 101, all operations by the local processing unit of the on-board device 101 will be performed on the acceleration samples provided by the accelerometric type sensor, net of the offset detected by the sensor in rest condition, and following the rotation of the accelerometric axis triad to align the Z axis of the sensor with the vertical direction of the transportation vehicle.

The local processing unit of the on-board device 101 is configured to filter the acceleration samples received from the accelerometric type sensor, e.g. using a 4-sample moving average filter.

The local processing unit of the on-board device 101 is further configured to record an anomalous stress on the basis of the filtered accelerometric sample processing, preferably using a so-called triggering algorithm.

One or more accelerometric threshold values and a corresponding time interval are defined according to such triggering algorithm. The accelerometric thresholds are preferably expressed in g, whilst the time durations are preferably expressed in sample units related to an acquisition with sampling frequency at 100 Hz.

A first accelerometric component Sx, corresponding to a set of accelerometric samples T1 recorded on the x axis of the accelerometric triad of the sensor, a second accelerometric component Sy, corresponding to a second set of accelerometric samples T1 recorded on the y axis of the accelerometric triad of the sensor, a third accelerometric component Sz, corresponding to a third set of accelerometric samples T1 recorded on the z axis of the accelerometric triad of the sensor, are also defined.

The local processing unit of the on-board device 101 is configured to record data representative of anomalous stresses (triggers) if in an event at least one of the components Sx and Sy exceeds the threshold A1, for a number of samples either higher than or equal to the time threshold.

Downstream of the triggering algorithm, the local processing unit of the on-board device 101 may be optionally configured to implement further conditions (for example, by defining further acceleration thresholds, time thresholds and/or other conditions) in order to record data representative of anomalous stresses (triggers) of priority type (crash) or of secondary type (mini-crash) or to reject the event itself.

The local processing unit of the on-board device 101 is configured to transmit the recorded data representative of anomalous stresses to the remote processing station 103.

In greater detail, the local processing unit of the on-board device 101 is configured to transmit in real time the data representative of anomalous stresses (triggers) of the priority type (crash) and to transmit at a set time the data representative of anomalous stresses (triggers) of the secondary type (mini-crash). The set time may be, for example, when the local processing unit of the on-board device 101 is saturated and must be emptied.

The remote processing station 103 is configured to validate such anomalous stresses once data representative of anomalous stresses recorded on the basis of the data acquired by the on-board device 101 are received from the on-board device 101 of the transportation vehicle 102.

A method 200 for detecting and validating anomalous stresses of a transportation vehicle 102 recorded and transmitted to a remote processing station 103 by an on-board device 101 adapted to acquire data relative to motion and/or driving parameters of a transportation vehicle 102 will now be described with reference to figure 2.

It is worth noting that the aforesaid method 200 for detecting and validating the anomalous stresses makes it advantageously possible to extract only the stresses recorded and transmitted by the on-board device 101 which are representative of events, such as crashes or accidents, to be signaled to an operator for management from an insurance or road safety point of view.

The method 200 comprises a symbolic step of starting ST.

The method 200 comprise a step of acquiring 21, by one or more sensors with which the on-board device 101 installed on a transportation vehicle 102 is equipped, data relative to motion and/or driving parameters of a transportation vehicle 102.

Examples of such one or more sensors were described above.

The method 200 further comprises a step of recording 22, by a local processing unit with which the on-board device 101 is equipped, data representative of anomalous stresses of the transportation vehicle 102 on the basis of the data acquired by the on-board device 101.

In one embodiment (not shown in the figures), the step of recording 22 comprises a step of comparing, by the local processing unit of the on-board device 101, the acceleration trend of the transportation vehicle detected with a plurality of reference profiles, each representative of the acceleration of the transportation vehicle in the case of a set collision.

After having identified the reference profile which is closest to the detected acceleration trend of the transportation vehicle, the step of recording 22 further comprises a step of establishing, by the local processing unit of the on-board device 101, whether the detected anomalous stress represents a priority event or not, on the basis of the energy content of the reference profile.

Turning back to the embodiment shown in figure 2, the method 200 further comprises a step of transmitting 23 to the remote processing station 103, by the local processing unit of the on-board device 101, the data recorded representative of anomalous stresses.

In an embodiment (not shown in the figures), the step of transmitting 23 comprises a step of transmitting in real time the data representative of anomalous stresses (triggers) of priority type (crashes) and at a set later time the data representative of anomalous stresses (triggers) of the secondary type (mini-crashes).

The anomalous stresses of priority type (crashes) and of secondary type (mini-crashes) are described above.

Turning back to the embodiment in figure 2, the method 200 comprises a step of providing 201, by the remote processing station 103, a database of data representative of basic anomalous stresses of true type and a database of data representative of basic anomalous stresses of false type.

The method 200 further comprises a step of applying 202, by the remote processing station 103, at least one first correlation filter based on a neural network to the data representative of an anomalous stress to be validated, recorded and transmitted by the on-board device 101.

In greater detail, such neural network is based on the comparison of some parameters with the reference database.

In particular, the signal energy and the mean and peak values of the accelerations on the three axes are taken into consideration.

The step of applying 202 at least one first correlation filter based on neural network comprises the steps of:
- comparing 203, by the remote processing station 103, the data representative of an anomalous stress received by the on-board device 101 with the data respectively stored in the database of data representative of basic anomalous stresses of true type and in the database of data representative of basic anomalous stresses of false type;
- if the data representative of an anomalous stress received by the on-board device 101 correspond to data stored in the database of data representative of basic anomalous stresses of true type, validating 204, by the remote processing station 103, the anomalous stress represented by the data representative of the anomalous stress received by the on-board device 101 as a true event;
- if the data representative of an anomalous stress received by the on-board device 101 correspond to data stored in the database of data representative of basic anomalous stresses of false type, validating 205 the anomalous stress represented by the data representative of the anomalous stress received by the on-board device 101 as a false type event.

The method 200 comprises a symbolic step of ending ED.

In an embodiment, in combination with the preceding one, the step of validating 204, by the remote processing station 103, the anomalous stress represented by the data representative of the anomalous stress received by the on-board device 101 as a true event comprises a step of assigning 204' a first binary value, e.g. "0", to the anomalous stress.

In an embodiment, in combination with any one of the preceding ones, the step of validating 205, by the remote processing station 103, the anomalous stress represented by the data representative of the anomalous stress received by the on-board device 101 as a true event comprises a step of assigning 205' a second binary value, e.g. "1", opposite to said first binary value, to the anomalous stress.

According to a further embodiment, in combination with any one of the preceding embodiments, the step of applying 202 further comprises a step of updating 206, by the remote processing station 103, both the data stored in the database of data representative of basic anomalous stresses of the true type and the data stored in the database of data representative of basic anomalous stresses of false type on the basis of the data representative of an anomalous stress received by the on-board device 101 compared therewith.

In an embodiment, in combination with any one of the preceding embodiments, the method 200 further comprises a step of applying 207, by the remote processing station 103, at least one second frequency filter of FFT type to the data representative of an anomalous stress to be validated, recorded and transmitted by the on-board device 101.

Such step of applying 207 the second frequency filter of FFT type comprises the steps of:
- establishing 208 one or more reference frequency values, the frequency values below such reference frequency value being representative of anomalous stresses of a first type either true or false, the frequency values above such reference frequency value being representative of anomalous stresses of a second type, opposite to the first, either true or false;
- adding 209 the low frequencies and the high frequencies of the signal representative of the data representative of an anomalous stress to be validated recorded and transmitted by the on-board device 101;
- calculating 210 the distance of the frequency value obtained in the step of adding with the reference frequency value;
- validating 211, by the remote processing station 103, the anomalous stress represented by the data representative of the anomalous stress received by the on-board device 101 as a true or false event on the basis of the value of the calculated distance.

In one embodiment, in combination with any one of the preceding steps, the step of validating 211, by the remote processing station 103, the anomalous stress represented by the data representative of the anomalous stress received by the on-board device 101 as a true or false event comprises a step of assigning 211' a first binary value, e.g. "0", or a second binary value, e.g. "1", opposite to said first binary value, to the anomalous stress.

In a further embodiment, in combination with any one of the preceding embodiments, the method 200 further comprises a step of applying 212, by the remote processing station 103, a third filter (excessive crash filter) to the data representative of an anomalous stress to be validated, recorded and transmitted by the on-board device 101.

The step of applying 212 the third filter comprises the steps of:
- setting 213, by the remote processing station 103, a parameter representative of the maximum number of anomalous stresses recordable by the on-board device mounted on a transportation vehicle in a set time period (e.g. daily);
- counting 214, by the remote processing station 103, the number of anomalous stresses received in the set time period by one same on-board device 101;
- validating 215, by the remote processing station 103, the anomalous stress represented by the data representative of the anomalous stress received by the on-board device 101 as a true or false event on the basis of the comparison between the number of anomalous stresses recorded and transmitted by the on-board device 101 in the set time period and the parameter representative of the maximum number of anomalous stresses recordable by the on-board device 101.

If the number of anomalous stresses recorded and transmitted by the on-board device 101 in the set time interval is higher than the parameter representing the maximum number of stresses which can be recorded by the on-board device 101, the anomalous stress recorded by the on-board device 101 will be validated, by the remote processing station 103, as a false event.

It is worth noting that the method 200 envisages the application of the second filter and of the third filter (or in general of N filters) every time.

Indeed, the combination matrix of the N filters, very simple and following the "or" pattern repeated N-1 times, envisages that an event must have passed all the N filters in order to be validated.

On the contrary, for an event to be classified as false, it is sufficient for only one filter to classify it as such.

According to an embodiment, in combination with the preceding one, the step of validating 215, by the remote processing station 103, the anomalous stress represented by the data representative of the anomalous stress received by the on-board device 101 as a true or false event comprises a step of assigning 215' a first binary value, e.g. "0", or a second binary value, e.g. "1", opposite to said first binary value, to the anomalous stress.

According to a non-claimed example, in combination with, or alternatively to any one of the embodiments described above in which at least two of the at least one first filter, the second filter and the third filter can be applied, the method 200 can comprise a step of mutually combining in OR the validation of an anomalous stress obtained after applying at least two of said at least one first filter, a second filter or a third filter.

According to a further embodiment (not shown in the figures), in combination with any one of the proceeding ones, the method 200 further comprises a step of classifying the validated anomalous stresses, by the remote processing station 103, on the basis of the acceleration detected on the on-board device 101 at an anomalous stress and the comparison of such detected acceleration with a set reference acceleration value.

In this embodiment *(collisions engine),* the method 200 further comprises a step of storing, in a remote memory unit, for each validated and classified anomalous stress, information representative of the type of impact (front crash, rear crash, side crash) as a function of the direction of the force received by the on-board device during the anomalous stress, the number of accelerations to which it was subjected, the energy index and the position.

In this manner, the event can be classified according to the most common impact dynamics.

This enriches the information to help the insurance operator establish the responsibility of the accident.

According to an embodiment, a program product can be loaded in a memory unit of an electronic computer.

The program product can be run by a data processing unit of the electronic computer in order to run the method for detecting and validating anomalous stresses according to any one of the embodiments described above.

According to an embodiment, the program product comprises a first program product which can be loaded in a memory of the on-board device 101 and can be run by a data processing unit of the on-board device 101, to detect the anomalous stresses according to any one of the embodiments described above.

According to an embodiment, the program product comprises a second program product which can be loaded in a memory of the remote processing station 103 and can be run by a data processing unit of the remote processing station 103, to validate it according to any one of the embodiments described above.

From the above it is apparent that a detecting and validating method of the type described above makes it possible to fully achieve the set objects in terms of overcoming the drawbacks of the prior art.

Firstly, in order to improve detection and validation quality, the possibility of passing on the validation to a remote processing station, provided with even high power processors, makes it advantageously possible to employ complex algorithms.

At the same time, this makes it possible to use standard on-board devices with consequent containment of costs and energy consumption (the latter aspect is important in terms of battery discharge time).

Furthermore, such aspect makes it still possible to use standard on-board devices, without needing to resort to upgrading the entire fleet of on-board devices or to replace such fleet with more evolved on-board devices, whereby significantly containing the phenomenon of obsolescence, avoiding or at least postponing as much as possible the upgraded costs of the entire fleet of on-board devices, considering that in the specific scope of application, such as insurance telematics, an on-board device may remain fitted on the same transportation vehicle for many years.

Notwithstanding the principle of the invention, embodiments and details may be greatly varied with respect to that described and illustrated herein exclusively by way of non-limiting example without departing from the scope of protection of the invention as defined in the appended claims.

## Claims

1. Method (200) for detecting and validating anomalous stresses of a transportation vehicle (102) recorded and transmitted to a remote processing station (103) by an on-board device (101) adapted for acquiring data relative to motion and/or driving parameters of a transportation vehicle (102), comprising steps of:
- acquiring (21), by one or more sensors with which the on-board device (101) installed on a transportation vehicle (102) is equipped, data relative to motion and/or driving parameters of a transportation vehicle (102);
- recording (22), by a local processing unit with which the on-board device (101) is equipped, data representative of an anomalous stress of the transportation vehicle (102) based on the data acquired by the on-board device (101), the step of recording (22) comprising a step of comparing, by the local processing unit of the on-board device (101), the trend of the acceleration of the transportation vehicle (102) detected with a plurality of reference profiles each representative of the acceleration of the transportation vehicle (102) in the case of a set collision, wherein, once the reference profile that comes closest to the acceleration pattern of the detected transportation vehicle has been identified, the step of recording (22) also comprising a step of establishing, by the local processing unit of the on-board device (101), whether the anomalous stress detected represents a priority event or not, based on the energy content of the reference profile;
- transmitting (23) to the remote processing station (103), by the local processing unit of the on-board device (101), the data recorded representative of an anomalous stress, the step of transmitting (23) comprising a step of transmitting in real time the data representative of anomalous stresses of the priority type and at a set later time the data representative of anomalous stresses of the secondary type, stored in a local memory unit of the on-board device (101);
- providing (201), by the remote processing station (103), a database of data representative of base anomalous stresses of the true type and a database of data representative of base anomalous stresses of the false type;
- applying (202) to the data representative of an anomalous stress to be validated, recorded and transmitted by the on-board device (101), by the remote processing station (103), at least one first correlation filter based on a neural network, the step of applying (202) at least one first correlation filter comprising the steps of:
- comparing (203), by the remote processing station (103), the data representative of an anomalous stress received by the on-board device (101) with the data respectively stored in the database of data representative of base anomalous stresses of the true type and in the database of data representative of base anomalous stresses of the false type;
- if the data representative of an anomalous stress received by the on-board device (101) correspond to data stored in the database of data representative of base anomalous stresses of the true type, validating (204), by the remote processing station (103), the anomalous stress represented by the data representative of the anomalous stress received by the on-board device (101) as a true event;
- if the data representative of an anomalous stress received by the on-board device (101) correspond to data stored in the database of data representative of base anomalous stresses of the false type, validating (205) the anomalous stress represented by the data representative of the anomalous stress received by the on-board device (101) as a false event.

2. Method (200) according to claim 1, wherein the step of validating (204), by the remote processing station (103), the anomalous stress represented by the data representative of the anomalous stress received by the on-board device (101) as a true event comprises a step of assigning (204') a first binary value to the anomalous stress.

3. Method (200) according to claim 2, wherein the step of validating (205), by the remote processing station (103), the anomalous stress represented by the data representative of the anomalous stress received by the on-board device (101) as a true event comprises a step of assigning (205') a second binary value, opposite to said first binary value, to the anomalous stress.

4. Method (200) according to any one of the previous claims, wherein the step of applying (202) also comprises a step of updating (206), by the remote processing station (103), both the data stored in the database of data representative of base anomalous stresses of the true type and the data stored in the database of data representative of base anomalous stresses of the false type based on the data representative of an anomalous stress received by the on-board device (101) compared with them.

5. Method (200) according to any one of the previous claims, wherein the step of applying (207) a second frequency filter of the FFT type to the data representative of an anomalous stress to be validated and transmitted by the on-board device (101), by the remote processing station (103), the step of applying (207) the second frequency filter of the FFT type comprising steps of:
- establishing (208) a reference frequency value, the frequency values below such a reference frequency value being representative of anomalous stresses of a first type from true and false, the frequency values above such a reference frequency value being representative of anomalous stresses of a second type, opposite to the first, from true and false;
- adding (209) the low frequencies and the high frequencies of the signal representative of the data representative of an anomalous stress to be validated recorded and transmitted by the on-board device (101);
- calculating (210) the distance of the frequency value obtained in the step of adding with the reference frequency value;
- validating (211), by the remote processing station (103), the anomalous stress represented by the data representative of the anomalous stress received by the on-board device (101) as a true or false event based on the value of the calculated distance.

6. Method (200) according to claim 5, wherein the step of validating (211), by the remote processing station (103), the anomalous stress represented by the data representative of the anomalous stress received by the on-board device (101) as a true or false event comprises a step of assigning (211') a first binary value or a second binary value, opposite to said first binary value, to the anomalous stress.

7. Method (200) according to any one of the previous claims, also comprising a step of applying (212) a third filter to the data representative of an anomalous stress to be validated recorded and transmitted by the on-board device (101), by the remote processing station (103), the step of applying (212) the third filter comprises steps of:
- establishing (213), by the remote processing station (103), a parameter representative of the maximum number of anomalous stresses recordable by the on-board device mounted on a transportation vehicle in a set time period;
- counting (214), by the remote processing station (103), the number of anomalous stresses received in the set time period by one same on-board device (101);
- validating (215), by the remote processing station (103), the anomalous stress represented by the data representative of the anomalous stress received by the on-board device (101) as a true or false event based on the comparison between the number of anomalous stresses recorded and transmitted by the on-board device (101) in the set time period and the parameter representative of the maximum number of anomalous stresses recordable by the on-board device (101).

8. Method (200) according to claim 7, wherein the step of validating (215), by the remote processing station (103), the anomalous stress represented by the data representative of the anomalous stress received by the on-board device (101) as a true or false event comprises a step of assigning (215') a first binary value, or a second binary value, opposite to said first binary value, to the anomalous stress.

9. Method (200) according to any one of the previous claims, also comprising a step of classifying the anomalous stresses validated, by the remote processing station (103), based on the acceleration detected on the on-board device (101) at an anomalous stress and the comparison of such detected acceleration with a set reference acceleration value.

10. Method (200) according to claim 9, also comprising a step of storing, by the remote processing station (103), in a remote memory unit, for each anomalous stress validated and classified, information representative of the type of impact as a function of the direction of the force received by the on-board device during the anomalous stress, the number of accelerations undergone, the energy index and the position.

11. System (100) for detecting and validating anomalous stresses of a transportation vehicle recorded and transmitted to a remote processing station (103) by an on-board device (101) adapted for acquiring data relative to motion and/or driving parameters of a transportation vehicle (102), the system (100) comprising:
- an on-board device (101) installed on a transportation vehicle (102),
- at least one remote processing station (103) operatively connected to the on-board device (101) through a data communication network (104),
the on-board device (101) and said at least one remote processing station (103) being configured to carry out the detecting and validating method (200) in accordance with any one of the previous claims.

12. Program product able to be loaded in a memory unit of an electronic calculator, the program product being able to be carried out by a data processor of the electronic calculator to carry out the validating method (200) in accordance with any one of the previous claims 1 to 10.

## Patentansprüche

1. Verfahren (200) zum Detektieren und Validieren von anormalen Belastungen eines Transportfahrzeugs (102), die von einer fahrzeugseitigen Vorrichtung (101), die für das Erfassen von Daten in Bezug auf Bewegungs- und/oder Fahrparameter eines Transportfahrzeugs (102) geeignet ist, aufgezeichnet und auf eine Fernverarbeitungsstation (103) übertragen werden, umfassend die Schritte:
- Erfassen (21), durch einen oder mehrere Sensoren, mit denen die fahrzeugseitige Vorrichtung (101), die an einem Transportfahrzeug (102) installiert ist, ausgestattet ist, von Daten in Bezug auf Bewegungs- und/oder Fahrparameter eines Transportfahrzeugs (102);
- Aufzeichnen (22), durch eine lokale Verarbeitungseinheit, mit der die fahrzeugseitige Vorrichtung (101) ausgestattet ist, von Daten, die für eine anormale Belastung des Transportfahrzeugs (102) repräsentativ sind, aufgrund der Daten, die von der fahrzeugseitigen Vorrichtung (101) erfasst werden, wobei der Schritt des Aufzeichnens (22) einen Schritt des Vergleichens, durch die lokale Verarbeitungseinheit der fahrzeugseitigen Vorrichtung (101), des Trends der Beschleunigung des Transportfahrzeugs (102), die mit einer Vielzahl von Referenzprofilen detektiert wird, wovon jedes für die Beschleunigung des Transportfahrzeugs (102) im Falle einer bestimmten Kollision repräsentativ ist, umfasst, worin, nachdem das Referenzprofil, das dem Beschleunigungsmuster des detektierten Transportfahrzeugs am nächsten kommt, identifiziert wurde, der Schritt des Aufzeichnens (22) auch einen Schritt des Festsetzens, durch die lokale Verarbeitungseinheit der fahrzeugseitigen Vorrichtung (101), ob die anormale Belastung, die detektiert wurde, aufgrund des Energiegehaltes des Referenzprofils, ein Prioritätsereignis darstellt oder nicht, umfasst;
- Übertragen (23) auf die Fernverarbeitungsstation (103), durch die lokale Verarbeitungseinheit der fahrzeugseitigen Vorrichtung (101), der Daten, die aufgezeichnet wurden und die für eine anormale Belastung repräsentativ sind, wobei der Schritt des Übertragens (23) einen Schritt des Übertragens in Echtzeit der Daten, die für anormale Belastungen der Prioritätsart repräsentativ sind, und zu einem bestimmten späteren Zeitpunkt der Daten, die für anormale Belastungen der sekundären Art repräsentativ sind, die in einer lokalen Speichereinheit der fahrzeugseitigen Vorrichtung (101) abgespeichert sind, umfasst;
- Bereitstellen (201), durch die Fernverarbeitungsstation (103), einer Datenbank von Daten, die für anormale Grundbelastungen der wahren Art repräsentativ sind, und einer Datenbank von Daten, die für anormale Grundbelastungen der falschen Art repräsentativ sind,
- Anwenden (202) auf die Daten, die für eine anormale Belastung repräsentativ sind, die von der fahrzeugseitigen Vorrichtung (101) validiert, aufgezeichnet und übertragen werden sollen, durch die Fernverarbeitungsstation (103), zumindest eines ersten Korrelationsfilters aufgrund eines neuronalen Netzwerkes, wobei der Schritt des Anwendens (202) zumindest eines ersten Korrelationsfilters die Schritte umfasst:
- Vergleichen (203), durch die Fernverarbeitungsstation (103), der Daten, die für eine anormale Belastung repräsentativ sind, die von der fahrzeugseitigen Vorrichtung (101) empfangen wird, mit den Daten, die jeweils in der Datenbank von Daten, die für anormale Grundbelastungen der wahren Art repräsentativ sind, und in der Datenbank von Daten, die für anormale Grundbelastungen der falschen Art repräsentativ sind, abgespeichert sind,
- wenn die Daten, die für eine anormale Belastung repräsentativ sind, die von der fahrzeugseitigen Vorrichtung (101) empfangen wird, Daten entsprechen, die in der Datenbank von Daten, die für anormale Grundbelastungen der wahren Art repräsentativ sind, Validieren (204), durch die Fernverarbeitungsstation (103), der anormalen Belastung, die von den Daten repräsentiert wird, die für die anormale Belastung repräsentativ sind, die von der fahrzeugseitigen Vorrichtung (101) empfangen wird, als wahres Ereignis;
- wenn die Daten, die für eine anormale Belastung repräsentativ sind, die von der fahrzeugseitigen Vorrichtung (101) empfangen wird, Daten entsprechen, die in der Datenbank von Daten, die für anormale Grundbelastungen der falschen Art repräsentativ sind, Validieren (205) der anormalen Belastung, die von den Daten repräsentiert wird, die für die anormale Belastung repräsentativ sind, die von der fahrzeugseitigen Vorrichtung (101) empfangen wird, als falsches Ereignis.

2. Verfahren (200) nach Anspruch 1, worin der Schritt des Validierens (204), durch die Fernverarbeitungsstation (103), der anormalen Belastung, die von den Daten repräsentiert wird, die für die anormale Belastung repräsentativ sind, die von der fahrzeugseitigen Vorrichtung (101) empfangen wird, als wahres Ereignis einen Schritt des Zuteilens (204') eines ersten binären Wertes der anormalen Belastung umfasst.

3. Verfahren (200) nach Anspruch 2, worin der Schritt des Validierens (205), durch die Fernverarbeitungsstation (103), der anormalen Belastung, die von den Daten repräsentiert wird, die für die anormale Belastung repräsentativ sind, die von der fahrzeugseitigen Vorrichtung (101) empfangen wird, als wahres Ereignis einen Schritt des Zuteilens (205') eines zweiten binären Wertes, der dem genannten ersten binären Wert entgegengesetzt ist, der anormalen Belastung umfasst.

4. Verfahren (200) nach einem der vorhergehenden Ansprüche, worin der Schritt des Anwendens (202) auch einen Schritt des Aktualisierens (206), durch die Fernverarbeitungsstation (103), sowohl der Daten, die in der Datenbank von Daten, die für anormale Grundbelastungen der wahren Art repräsentativ sind, abgespeichert sind, als auch der Daten, die in der Datenbank von Daten, die für anormale Grundbelastungen der falschen Art repräsentativ sind, abgespeichert sind, aufgrund der Daten, die für eine anormale Belastung repräsentativ sind, die von der fahrzeugseitigen Vorrichtung (101) empfangen wird, mit ihnen verglichen, umfasst.

5. Verfahren (200) nach einem der vorhergehenden Ansprüche, worin der Schritt des Anwendens (207) eines zweiten Frequenzfilters der FFT-Art auf die Daten, die für eine anormale Belastung repräsentativ sind, die von der fahrzeugseitigen Vorrichtung (101) validiert und übertragen werden sollen, durch die Fernverarbeitungsstation (103), worin der Schritt des Anwendens (207) des zweiten Frequenzfilters der FFT-Art die Schritte umfasst:
- Festsetzen (208) eines Referenzfrequenzwertes, wobei die Frequenzwerte unterhalb eines solchen Referenzfrequenzwertes für anormale Belastungen einer ersten Art von wahr und falsch repräsentativ sind, wobei die Frequenzwerte oberhalb eines solchen Referenzfrequenzwertes für anormale Belastungen einer zweiten Art, die der ersten entgegengesetzt ist, von wahr und falsch repräsentativ sind,
- Addieren (209) der Niederfrequenzen und der Hochfrequenzen des Signals, das für die Daten repräsentativ ist, die für eine anormale Belastung, die von der fahrzeugseitigen Vorrichtung (101) validiert, aufgezeichnet und übertragen werden sollen, repräsentativ sind,
- Berechnen (210) des Abstands des Frequenzwertes, der im Schritt des Addierens erhalten wird, mit dem Referenzfrequenzwert;
- Validieren (211), durch die Fernverarbeitungsstation (103), der anormalen Belastung, die von den Daten repräsentiert wird, die für die anormale Belastung repräsentativ sind, die von der fahrzeugseitigen Vorrichtung (101) empfangen wird, als wahres oder falsches Ereignis aufgrund des Wertes des berechneten Abstands.

6. Verfahren (200) nach Anspruch 5, worin der Schritt des Validierens (211), durch die Fernverarbeitungsstation (103), der anormalen Belastung, die von den Daten repräsentiert wird, die für die anormale Belastung repräsentativ sind, die von der fahrzeugseitigen Vorrichtung (101) empfangen wird, als wahres oder falsches Ereignis einen Schritt des Zuteilens (211') eines ersten binären Wertes oder eines zweiten binären Wertes, der dem genannten ersten binären Wert entgegengesetzt ist, der anormalen Belastung umfasst.

7. Verfahren (200) nach einem der vorhergehenden Ansprüche, auch umfassend einen Schritt des Anwendens (212) eines dritten Filters auf die Daten, die für eine anormale Belastung, die von der fahrzeugseitigen Vorrichtung (101) validiert, aufgezeichnet und übertragen werden sollen, repräsentativ sind, durch die Fernverarbeitungsstation (103), wobei der Schritt des Anwendens (212) des dritten Filters die Schritte umfasst:
- Festsetzen (213), durch die Fernverarbeitungsstation (103), eines Parameters, der für die Höchstzahl von anormalen Belastungen, die von der fahrzeugseitigen Vorrichtung aufzeichenbar sind, die an einem Transportfahrzeug montiert ist, in einem bestimmten Zeitraum repräsentativ ist,
- Zählen (214), durch die Fernverarbeitungsstation (103), der Zahl von anormalen Belastungen, die in dem bestimmten Zeitraum von ein und derselben fahrzeugseitigen Vorrichtung (101) empfangen werden,
- Validieren (215), durch die Fernverarbeitungsstation (103), der anormalen Belastung, die von den Daten repräsentiert wird, die für die anormale Belastung repräsentativ sind, die von der fahrzeugseitigen Vorrichtung (101) empfangen wird, als wahres oder falsches Ereignis aufgrund des Vergleichs zwischen der Zahl von anormalen Belastungen, die von der fahrzeugseitigen Vorrichtung (101) in dem bestimmten Zeitraum aufgezeichnet und übertragen werden, und dem Parameter, der für die Höchstzahl von anormalen Belastungen, die von der fahrzeugseitigen Vorrichtung aufzeichenbar sind, repräsentativ ist.

8. Verfahren (200) nach Anspruch 7, worin der Schritt des Validierens (215), durch die Fernverarbeitungsstation (103), der anormalen Belastung, die von den Daten repräsentiert wird, die für die anormale Belastung repräsentativ sind, die von der fahrzeugseitigen Vorrichtung (101) empfangen wird, als wahres oder falsches Ereignis einen Schritt des Zuteilens (215') eines ersten binären Wertes, oder eines zweiten binären Wertes, der dem genannten ersten binären Wert entgegengesetzt ist, der anormalen Belastung umfasst.

9. Verfahren (200) nach einem der vorhergehenden Ansprüche, auch umfassend einen Schritt des Klassifizierens der anormalen Belastungen, die validiert wurden, durch die Fernverarbeitungsstation (103), aufgrund der Beschleunigung, die an der fahrzeugseitigen Vorrichtung (101) bei einer anormalen Belastung detektiert wurde, und des Vergleichs einer solchen detektierten Beschleunigung mit einem bestimmten Referenz-Beschleunigungswert.

10. Verfahren (200) nach Anspruch 9, auch umfassend einen Schritt des Abspeicherns, durch die Fernverarbeitungsstation (103), in einer Fernspeichereinheit, für jede anormale Belastung, die validiert und klassifiziert wurde, von Informationen, die für die Art des Aufpralls repräsentativ sind, in Abhängigkeit von der Richtung der Kraft, die von der fahrzeugseitigen Vorrichtung während der anormalen Belastung, der Anzahl von Beschleunigungen, die erfahren wurden, dem Energieindex und der Position empfangen wurde.

11. System (100) zum Detektieren und Validieren von anormalen Belastungen eines Transportfahrzeugs, die von einer fahrzeugseitigen Vorrichtung (101), die für das Erfassen von Daten in Bezug auf Bewegungs- und/oder Fahrparameter eines Transportfahrzeugs (102) geeignet ist, aufgezeichnet und auf eine Fernverarbeitungsstation (103) übertragen werden, wobei das System (100) umfasst:
- eine fahrzeugseitige Vorrichtung (101), die an einem Transportfahrzeug (102) installiert ist,
- zumindest eine Fernverarbeitungsstation (103), die mit der fahrzeugseitigen Vorrichtung (101) über ein Datenkommunikationsnetzwerk (104) wirkmäßig verbunden ist,
wobei die fahrzeugseitige Vorrichtung (101) und die genannte zumindest eine Fernverarbeitungsstation (103) dazu konfiguriert sind, das Detektier- und Validierverfahren (200) nach einem der vorhergehenden Ansprüche durchzuführen.

12. Programmprodukt, das in einer Speichereinheit eines elektronischen Rechners aufgeladen werden kann, wobei das Programmprodukt von einem Datenprozessor des elektronischen Rechners durchgeführt werden kann, um das Validierverfahren (200) nach einem der vorhergehenden Ansprüche 1 bis 10 durchzuführen.

## Revendications

1. Procédé (200) de détection et de validation de contraintes anormales d'un véhicule de transport (102) enregistrées et transmises à une station de traitement à distance (103) par un dispositif embarqué (101) adapté à l'acquisition de données relatives à des paramètres de mouvement et/ou de conduite d'un véhicule de transport (102), consistant à :
- acquérir (21), par un ou plusieurs capteurs dont est équipé le dispositif embarqué (101) installé sur un véhicule de transport (102), des données relatives à des paramètres de mouvement et/ou de conduite d'un véhicule de transport (102) ;
- enregistrer (22), par une unité de traitement locale dont est équipé le dispositif embarqué (101), des données représentatives d'une contrainte anormale du véhicule (102) sur la base des données acquises par le dispositif embarqué (101), l'étape d'enregistrement (22) comprenant une étape de comparaison, par l'unité de traitement locale du dispositif embarqué (101), de la tendance de l'accélération du véhicule de transport (102) détectée à une pluralité de profils de référence chacun représentatifs de l'accélération du véhicule de transport (102) en cas de collision définie, dans lequel, une fois que le profil de référence qui se rapproche le plus du schéma d'accélération du véhicule de transport détecté a été identifié, l'étape d'enregistrement (22) comprenant également une étape consistant à établir, par l'unité de traitement locale du dispositif embarqué (101), si la contrainte anormale détectée représente un événement prioritaire ou non, sur la base du contenu énergétique du profil de référence ;
- transmettre (23) à la station de traitement à distance (103), par l'unité de traitement locale du dispositif embarqué (101), les données enregistrées représentatives d'une contrainte anormale, l'étape de transmission (23) comprenant une étape de transmission en temps réel des données représentatives des contraintes anormales du type prioritaire et à un moment ultérieur défini des données représentatives des contraintes anormales du type secondaire, stockées dans une unité de mémoire locale du dispositif embarqué (101) ;
- fournir (201), par la station de traitement à distance (103), une base de données représentative des contraintes anormales de base de vrai type et une base de données représentative des contraintes anormales de base de faux type ;
- appliquer (202) aux données représentatives d'une contrainte anormale à valider, enregistrer et transmettre par le dispositif embarqué (101), par la station de traitement à distance (103), au moins un premier filtre à corrélation basé sur un réseau neuronal, l'étape d'application (202) d'au moins un premier filtre à corrélation comprenant les étapes consistant à :
- comparer (203), par la station de traitement à distance (103), les données représentatives d'une contrainte anormale reçues par le dispositif embarqué (101) aux données stockées dans la base de données de données représentatives de contraintes anormales de base de vrai type et dans la base de données de données représentatives de contraintes anormales de base de faux type, respectivement ;
- si les données représentatives d'une contrainte anormale reçues par le dispositif embarqué (101) correspondent à des données stockées dans la base de données de données représentatives de contraintes anormales de base de vrai type, valider (204), par la station de traitement à distance (103), la contrainte anormale représentée par les données représentatives de la contrainte anormale reçues par le dispositif embarqué (101) en tant qu'événement vrai ;
- si les données représentatives d'une contrainte anormale reçues par le dispositif embarqué (101) correspondent à des données stockées dans la base de données de données représentatives de contraintes anormales de base de faux type, valider (205) la contrainte anormale représentée par les données représentatives de la contrainte anormale reçues par le dispositif embarqué (101) en tant qu'événement faux.

2. Procédé (200) selon la revendication 1, dans lequel l'étape de validation (204), par la station de traitement à distance (103), de la contrainte anormale représentée par les données représentatives de la contrainte anormale reçues par le dispositif embarqué (101) en tant qu'événement vrai comprend une étape d'attribution (204') d'une première valeur binaire à la contrainte anormale.

3. Procédé (200) selon la revendication 2, dans lequel l'étape de validation (205), par la station de traitement à distance (103), de la contrainte anormale représentée par les données représentatives de la contrainte anormale reçues par le dispositif embarqué (101) en tant qu'événement vrai comprend une étape d'attribution (205') d'une seconde valeur binaire, opposée à ladite première valeur binaire, à la contrainte anormale.

4. Procédé (200) selon l'une quelconque des revendications précédentes, dans lequel l'étape d'application (202) comprend également une étape de mise à jour (206), par la station de traitement à distance (103), à la fois des données stockées dans la base de données de données représentatives de contraintes anormales de base de vrai type et des données stockées dans la base de données de données représentatives de contraintes anormales de base de faux type sur la base des données représentatives d'une contrainte anormale reçues par le dispositif embarqué (101) comparées à celles-ci.

5. Procédé (200) selon l'une quelconque des revendications précédentes, dans lequel l'étape d'application (207) d'un second filtre de fréquence de type FFT aux données représentatives d'une contrainte anormale à valider et à transmettre par le dispositif embarqué (101), par la station de traitement à distance (103), l'étape d'application (207) du second filtre de fréquence de type FFT comprend les étapes consistant :
- établir (208) une valeur de fréquence de référence, les valeurs de fréquence inférieures à une telle valeur de fréquence de référence étant représentatives de contraintes anormales d'un premier type provenant des types vrai et faux, les valeurs de fréquence supérieures à une telle valeur de fréquence de référence étant représentatives de contraintes anormales d'un second type, opposé au premier, provenant des types vrai et faux ;
- additionner (209) les basses fréquences et les hautes fréquences du signal représentatif des données représentatives d'une contrainte anormale à valider, enregistrer et transmettre par le dispositif embarqué (101) ;
- calculer (210) la distance de la valeur de fréquence obtenue à l'étape d'addition avec la valeur de fréquence de référence ;
- valider (211), par la station de traitement à distance (103), la contrainte anormale représentée par les données représentatives de la contrainte anormale reçues par le dispositif embarqué (101) en tant qu'événement vrai ou faux sur la base de la valeur de la distance calculée.

6. Procédé (200) selon la revendication 5, dans lequel l'étape de validation (211), par la station de traitement à distance (103), de la contrainte anormale représentée par les données représentatives de la contrainte anormale reçues par le dispositif embarqué (101) en tant qu'événement vrai ou faux comprend une étape d'attribution (211') d'une première valeur binaire ou d'une seconde valeur binaire, opposée à ladite première valeur binaire, à la contrainte anormale.

7. Procédé (200) selon l'une quelconque des revendications précédentes, comprenant également une étape d'application (212) d'un troisième filtre aux données représentatives d'une contrainte anormale à valider, à enregistrer et à transmettre par le dispositif embarqué (101), par la station de traitement à distance (103), l'étape d'application (212) du troisième filtre comprend les étapes consistant à :
- établir (213), par la station de traitement à distance (103), un paramètre représentatif du nombre maximal de contraintes anormales enregistrables par le dispositif embarqué monté sur un véhicule de transport dans une période de temps définie ;
- compter (214), par la station de traitement à distance (103), le nombre de contraintes anormales reçues dans la période de temps définie par un même dispositif embarqué (101) ;
- valider (215), par la station de traitement à distance (103), la contrainte anormale représentée par les données représentatives de la contrainte anormale reçues par le dispositif embarqué (101) en tant qu'événement vrai ou faux sur la base de la comparaison entre le nombre de contraintes anormales enregistrées et transmises par le dispositif embarqué (101) dans la période de temps définie et le paramètre représentatif du nombre maximal de contraintes anormales enregistrables par le dispositif embarqué (101).

8. Procédé (200) selon la revendication 7, dans lequel l'étape de validation (215), par la station de traitement à distance (103), de la contrainte anormale représentée par les données représentatives de la contrainte anormale reçues par le dispositif embarqué (101) en tant qu'événement vrai ou faux comprend une étape d'attribution (215') d'une première valeur binaire, ou d'une seconde valeur binaire, opposée à ladite première valeur binaire, à la contrainte anormale.

9. Procédé (200) selon l'une quelconque des revendications précédentes, comprenant également une étape de classement des contraintes anormales validées, par la station de traitement à distance (103), sur la base de l'accélération détectée sur le dispositif embarqué (101) au niveau d'une contrainte anormale et de la comparaison d'une telle accélération détectée à une valeur d'accélération de référence définie.

10. Procédé (200) selon la revendication 9, comprenant également une étape de stockage, par la station de traitement à distance (103), dans une unité de mémoire à distance, pour chaque contrainte anormale validée et classée, d'informations représentatives du type d'impact en fonction de la direction de la force reçue par le dispositif embarqué pendant la contrainte anormale, du nombre d'accélérations subies, de l'indice d'énergie et de la position.

11. Système (100) de détection et de validation de contraintes anormales d'un véhicule de transport enregistrées et transmises à une station de traitement à distance (103) par un dispositif embarqué (101) adapté à l'acquisition de données relatives à des paramètres de mouvement et/ou de conduite d'un véhicule de transport (102), le système (100) comprenant :
- un dispositif embarqué (101) installé sur un véhicule de transport (102),
- au moins une station de traitement à distance (103) fonctionnellement reliée au dispositif embarqué (101) par l'intermédiaire d'un réseau de communication de données (104),
le dispositif embarqué (101) et ladite au moins une station de traitement à distance (103) étant configurés pour mettre en oeuvre le procédé de détection et de validation (200) selon l'une quelconque des revendications précédentes.

12. Produit-programme pouvant être chargé dans une unité de mémoire d'une calculatrice électronique, le produit-programme pouvant être exécuté par un processeur de données de la calculatrice électronique pour exécuter le procédé de validation (200) selon l'une quelconque des revendications précédentes 1 à 10.
